# EUROPEAN PATENT APPLICATION

(11) **EP 1 026 848 A2**
(43) Date of publication of application: **09.08.2000**
(21) Application number: 00850020.9
(22) Date of filing: 03.02.2000
(51) Int. Cl.: H04J 3/16, H04J 3/22

(54) **Method for mapping data**

(30) Priority: 04.02.1999 SE 9900373
(71) Applicant: Net Insight AB, 126 14 Stockholm (SE)
(72) Inventor: Olsson, Bengt J., 147 34 Tumba (SE)
(74) Representative: Ellner, Lars O.

(57) **Abstract**

The present invention relates to methods for mapping E1 traffic from one link to another. According to the invention a continuous stream of E1 frames is received. Time slot zero (TS0) is deleted from a predefined selection of the E1 frames, and an information field is repeatedly added to identify the location of a plurality of such size-reduced frames.

## Description

### Technical Field of Invention

The present invention relates to a method for mapping E1 traffic from a first communication link to a second communicatin link.

### Background of the Invention

In communication networks, the dominating transmission technology for transferring traditional telephony signals, for example between phones or facsimile machines, is referred to as Plesiochronous Digital Hierarchy, PDH. The European standard for transmission of PDH traffic at 2048 kbps is generally referred to as E1 and is defined in ITU-T Recommendation G.704.

Recently, a new transmission technology, referred to as Dynamic Synchronous Transfer Mode, DTM, has been developed. When DTM is used to carry E1 traffic, a method for mapping E1 traffic to/from DTM traffic is needed.

In both E1 and DTM, the traffic is divided into frames, which in turn are divided into time slots, each comprising a number of bits. In E1, a bit-rate of 2048 kbps and a frame frequency, i.e. frame repetition frequency, of 8 kHz, corresponding to a frame size of 125 µs, is used. Each E1 frame thus consists of 256 bits, divided into 32 E1 time slots each comprising 8 bits. DTM, in similar to E1, in one version also uses a frame frequency of 8 kHz, corresponding to a frame size of 125 µs. In this version of DTM, each frame is divided in 64-bit DTM time slots, and the number of time slots within each frame depends upon the selected bit rate. For example, using a bit rate of 1 Gbps, each DTM frame will comprise approximately 1900 DTM time slots.

As an E1 frame consists of 256 bits, and as a DTM time slot consists of 64 bits, one E1 frame can be carried by four DTM time slots. Thus, ideally, four DTM slots per DTM frame are needed to carry one E1 frame.

Unfortunately, this will only work if the frame frequency of the mediums that carry the E1 frames and the DTM frames are exactly the same, which in practice is never the case, or if the frame frequency of the medium that carries the E1 frames is lower than the frame frequency of the medium that carries the DTM frames.

If a situation occurs in which the frame frequency of the medium that carries the E1 frames is, ever so slightly, higher that the frame frequency of the medium that carries the DTM frames, the resulting frame drift will lead to a situation wherein the E1 frames will provide bits faster that what will fit into four DTM time slots per DTM frame. If only four slots per DTM frame is allocated per E1 frame, this situation would consequently inevitable lead to data slip. In this context, it is to be noted that a relative frame frequency difference (Δf/f) of up to approximately 100 ppm has to be expected and handled by any mapping mechanism of this kind.

The way to solve this problem has so far been to resort to allocating five DTM time slots per DTM frame instead of four for every E1 frame to be carried. This will mean that, for the majority of DTM frames, only four of these five DTM time slots will carry E1 data, whereas the fifth one will be marked as being idle. However, for a minority of DTM frames, all five or only three of these five DTM slots, depending on the polarity of the frequency difference, will be provided with E1 data, thereby accommodating the frequency difference. Although solving the frame frequency difference problem, the use of five DTM slots instead of four per E1 frame automatically imposes a 25 percent increase in DTM bandwidth utilization, which means a disadvantageous waste of resources.

An object of the invention is therefore to address the above discussed frame frequency deviation problem and to provide a simple solution thereto which accommodates for more efficient bandwidth utilization as compared to prior art.

### Summary of the Invention

The above mentioned and other objects of the invention are achieved by a method according to the accompanying claims.

Hence according to a first aspect of the invention, there is provided a method for mapping E1 traffic in a communication network, said method comprising receiving a continuous stream of E1 frames and for each set of N E1 frames performing the steps of: deleting time slot zero (TS0) from predefined E1 frames thereof, thereby transforming said set of N E1 frames into a modified set of frames that include size-reduced E1 frames; and adding an information field to said modified set of frames, said field identifying the location of said modified set of frames, the relation between the number of time slots so deleted from said set of N E1 frames and the size of said information field being such that the size of said modified set of frames and the thereto added information field is smaller than the size of said set of N E1 frames.

Preferably, the relation between the number of time slots so deleted from said set of N E1 frames and the size of said information field is such that the the relative difference in size between said set of N E1 frames and the combination of said modified set of frames and said additional information field is sufficient to accomodate for a relative frame frequency difference, between said links, of up to 100 ppm, thereby to accomodate for small differences between the frequency on the first and the frequency on the second link.

The invention thus provides an advantageous means for reducing the amount of data needed to transfer an E1 frame, thereby making it possible to accomodate for frequence differences if such exists between the first and second link.

According to a preferred embodiment, when using the invention to map E1 traffic into 64-bit time slots, such as DTM time slots, a set of M 64-bit time slots is generated for said each set of N received E1 frames, said method including: mapping said modified set of frames into M-m 64-bit time slots; and adding m additional 64-bit time slots to said M-m 64-bit time slots, said m additional 64-bit time slots providing said information field by identifying the location of said M-m 64-bit time slots and thus the location of said modified set of frames.

According to a more specific advantageous embodiment of the invention, there is provided a method for mapping E1 traffic into 64-bit time slots in a communication network, said method comprising receiving a continuous stream of E1 frames and for each multiframe of sixteen E1 frames generating a set of sixty-three 64-bit time slots by the steps of: deleting time slot zero (TS0) from each one of said sixteen E1 frames, thereby transforming said multiframe of sixteen E1 frames into a size-reduced multiframe containing sixteen size-reduced E1 frames; mapping said size-reduced multiframe into sixty-two 64-bit time slots; and adding an additional 64-bit time slot to said sixty-two 64-bit time slots, said additional 64-bit time slot identifying the location of said sixty-two 64-bit time slots and thus the location of said size-reduced multiframe containing sixteen size-reduced E1 frames.

The invention is thus based upon the idea of deleting time slot zero from a number of E1 frames and replacing this information with a super-frame location identifying information field.

According to an embodiment of the invention, the time slot zero (TS0), which is used to identify E1 frame start, of each E1 frame is deleted, and, instead, multi-frame location information is provided at predefined intervals in the DTM stream in which the size-reduced E1 frames are carried. The function of the multiframe location information is to identify where in the stream of 64-bit DTM slots that a plurality of size-reduced E1 frames are located.

At the other side of the DTM network, i.e. when extracting said E1 traffic from DTM slots, the location of the respective size-reduced E1 frames of the size-reduced E1 multiframe is determined by simply detecting said multiframe location information in the DTM stream, thus making it possible to generating renewed and complete E1 frames.

As, for example, sixty-two DTM time slots carrying sixteen size-reduced E1 frames together with one location identifying DTM time slot comprise a total of 63×64=4032 bits, this means, in comparison to the unreduced multi-frame size of 4096 bits, a size reduction of 64 bits, i.e. equivalent to exactly one DTM time slot. Consequently, if four DTM time slots per DTM frame are allocated per E1 frame to be carried by DTM, i.e. if 4×16=64 DTM time slots are used per E1 multiframe, i.e. one more DTM time slot than what is actually needed by the mapping mechanism, a frame frequency justification opportunity of 64 bits per multiframe, i.e. per 4096 bits, will be available to accommodate for any occurring differences in frame frequencies between the mediums that carry the E1 stream and the DTM stream. As a frequency justification opportunity of 64 bits per 4096 bits corresponds to a relative frame frequency difference of 64/4097=15625 ppm, this provides a guard band for accommodating frame frequency differences that is approximately 150 times larger than the required one of 100 ppm.

As noted, if four DTM slots are allocated to E1 traffic per E1 frame in the situation described above, there will, according to the discussion above, generally be one empty DTM time slot for each 16 E1 frames. This empty DTM time slot will then be marked as being idle, thus identifying to the receiving node that this DTM time slot does not carry valid information. This idle marked DTM slot will the simply be discarded at the receiving node. However, depending on the frame frequency deviation behavior, the extra DTM slot will occasionally be used for data transfer to avoid the above discussed slip situation.

An advantage of the invention is hence that it makes it possible to use DTM to carry E1 traffic on a four DTM slots per E1 frame basis. Thereby decreasing the amount of bandwidth required to carry E1 traffic by 20 percent as compared to prior art wherein five slots per frame had to be allocated.

As is understood, even though the selection of deleting each time slot zero and replacing it which a reduced-multiframe location identifier for each 16 reduced E1 frames forms a preferred embodiment, in a broader sense the invention may just as well be carried out by the deletion of time slot zero from a predefined selection of E1 frames and the adding of one or more super-frame location identifiers at a selected frame interval, preferably making sure that the so created reduction in the total number of required bits is enough to accommodate for the expected frame frequency deviation.

Thus, in a broader aspect, the invention provides a method of the kind mentioned in the introduction, said method comprising receiving a stream of E1 frames and for each set of N received E1 frames generating a set of M 64-bit time slots by the steps of: deleting time slot zero (TS0) from n predefined E1 frames of said set of N E1 frames; mapping the remaining bits into M-m 64-bit time slots; and adding m additional 64-bit time slots to said M-m 64-bit slots, wherein said additional time slots identify the location of said M-m 64-bit time slots and thus the location of said remaining bits of said set of N E1 frames.

According to this aspect, N, M, n, and m are integers selected in such a way that the relative difference in size between said set of N consecutive E1 frames and said set of M DTM time slots corresponds to a relative difference in frame frequency, between the mediums transporting said E1 frames and said DTM time slots, that is larger that 100 ppm.

According to another aspect of the invention, there is provided methods for deriving E1 traffic from a stream of data that includes size-reduced E1 frames and that has been generated in accordance with the invention as discussed above. By simply detecting, for example, a multi-frame identifying information field, for example in the form of a location identifying 64-bit DTM slot, the measures taken to then derive E1 data from the size-reduced multiframe so identified and, for each size-reduced E1 frame contained therein, typically for each 31 bits of data carried therein, adding a time slot zero to re-generate a complete E1 frame, will be straightforward.

For definition, DTM is a circuit switched time division multiplexed scheme wherein information is transferred on bitstreams. Each bitstream is divided into regularly recurrent, typically 125 µs frames, each comprising a number of fixed size, typically 64-bit, time slots, wherein the number of time slots per frame will depend upon the bitstream bit rate.

In DTM, so called DTM channels is defined by the allocating one or more of said time slots per frame to each respective DTM channel. Hence, a DTM channel is defined by one or more time slots occupying the same time slot position within each DTM frame of the bitstream upon which said DTM channel is carried. However, if a DTM channel reaches, for example, over two bitstreams, the channel may of course be defined by a different set of time slot positions on the two bitstreams. As the demand for network capacity changes, DTM channels may be dynamically established, terminated, or modified, the latter by changing the number of time slots allocated to a DTM channel. Also, the distribution of write access to time slot among different nodes may be dynamically modified as different nodes develop different needs for control signaling and data transfer.

According to yet another aspect of the invention, the above-mentioned modified set of frames, which includes size-reduced E1 frames, are used to generate a data packet, said modified set of frames forming the body thereof, the relation between the number of time slots so deleted from said set of N E1 frames and the size of the header/trailer of said data packet being such that said data packet is smaller that said set of N E1 frames.

An advantage with the size reduction accomplished by the invention according to this aspect is that it for example makes it possible to transmit E1 traffic received from a 2 Mbps link as E1 over IP traffic on a 2 Mbps link. Thus, conventonal E1 traffic can be transformed into E1 over IP without increasing the amount of data transmitted, thus for example making it possible to transmit the E1 over IP packets over a connection that has the same bandwidth as the E1 connection as such (2 Mbps).

Further information on the basics of DTM technology is found in "The DTM Gigabit Network", Christer Bohm, Per Lindgren, Lars Ramfelt, and Peter Sjödin, Journal of High Speed Networks, 3(2):109-126, 1994, and "Multi-gigabit networking based on DTM", Lars Gauffin, Lars Håkansson, and Björn Pehrson, Computer networks and ISDN Systems, 24(2):119-139, April 1992.

The above mentioned and other aspects, features and details of the invention will be more fully understood from the following description of a preferred embodiment thereof.

### Brief Description of the Drawings

An exemplifying embodiment of the invention will now be described with reference to the accompanying drawings, wherein:
Fig. 1 schematically illustrates the structure of a DTM bitstream;
Fig. 2 schematically shows how E1 frames are mapped into DTM slots according to an exemplifying embodiment of the invention; and
Fig. 3 schematically shows how E1 frames are mapped into UDP/IP packets according to another exempelifying embodiment of the invntion.

### Detailed Description of a Preferred Embodiment

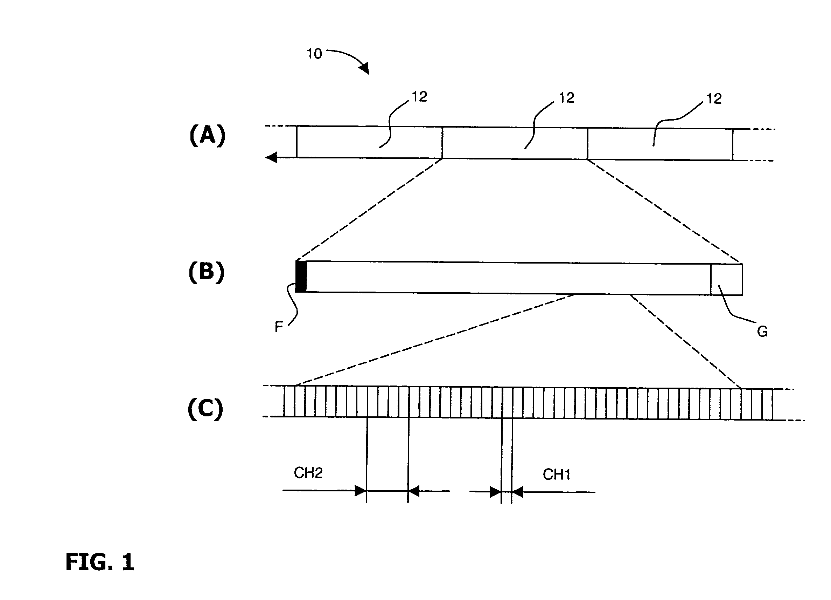

The data transport structure of a DTM bitstream will now be described with reference to Fig. 1.

As shown in Fig. 1 at (A), a DTM bitstream 10 is divided into recurrent, 125 µs frames 12. Each frame is in turn divided into a plurality of 64-bit time slots. The total number of DTM time slots within each frame will depend upon the bitstream bit-rate. For example, if using a bit-rate of 2 Gbps, the total number of time slots within each frame will be approximately 3900.

As shown in Fig. 1 at (B), the start of each DTM frame is defined by a 64-bit frame synchronization time slot F, and each frame ends with one or more 64-bit guard band time slots G.

DTM channels are established on the bitstream 10 by the allocation of DTM 64-bit time slots to the respective channels. The time slots allocated to a channel will occupy the same time slot positions within each frame of the bitstream 10. A DTM channel may be established to comprise any selected number of time slots, ranging from one slot per frame up to the total number of available slots per frame. The smallest possible channel size will hence be that of a channel occupying one DTM time slot per frame, corresponding to 64 bits per 125 µs frame, i.e. 512 kbps, as is schematically illustrated by channel CH1 at (C) in Fig. 1. As another example, channel CH2 illustrated at (C) in Fig. 1 is defined by four DTM time slots per DTM frame, corresponding to 4×64=256 bits per 125 µs frame, i.e. 2048 kbps, which using the invention will be sufficient bandwidth to carry an E1 stream without risking data slip due to frame frequency deviations.

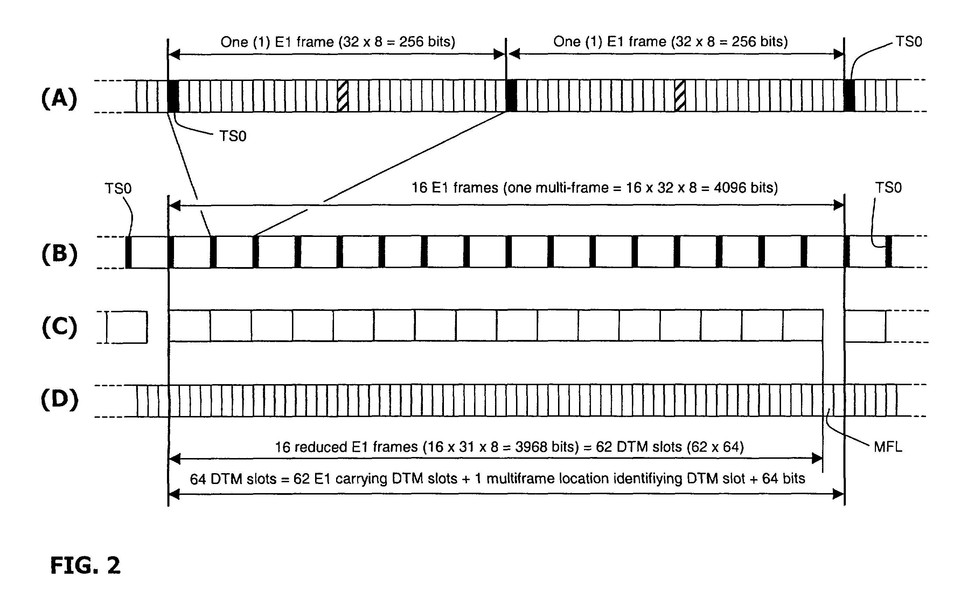

An exemplified embodiment of how E1 frames are mapped into DTM slots according to the invention will now be described with reference to Fig. 2.

In Fig. 2, two consecutive E1 frames, forming part of a continuous stream of E1 frames, are shown in detail at (A). Each E1 frame has a duration of 125 µs and comprises thirty-two E1 time slot. Each slot defines a respective channel and consists of one byte (eight bits), each channel thus corresponding to a bandwidth of 64 kbps.

In each E1 frame, the first time slot, which is also referred to as time slot zero or "TS0", is used to provide E1 frame synchronization. Furthermore, the sixteenth time slot, marked with dashed lines in Fig. 2(A), is typically (optionally) used for control signaling. Each one of the remaining thirty E1 time slots is used for transferring payload traffic. A channel may for example carry a PCM coded voiceband signal or a 64 kbps digital signal.

In Fig. 2, an E1 multiframe, comprising sixteen consecutive E1 frames of said continuous stream of E1 frames, is shown at (B), wherein the respective time slot zero TS0 of each E1 frame is schematically indicated. As each multiframe comprises sixteen E1 frames, each E1 frame comprises thirty-two time slots, and each E1 time slot comprises one byte (eight bits), the total number of bits per multiframe is 16×32×8=4096.

According to this exemplifying embodiment of the invention, the time slot zero TS0 of each received E1 frame is deleted, thereby leaving a size-reduced multi-frame of sixteen size-reduced E1 frames encompassing a total of 16×31×8=3968 bits, as schematically indicated at (C) in Fig. 2.

As a DTM slot comprises 64 bits, 3968 bits corresponds to sixty-two DTM slots. The size-reduced E1 frames of the size-reduced multiframe are thus mapped, in closely packed formation, to form sixty-two DTM slots, as illustrated in Fig. 2 at (D).

On top of each such set of sixty-two DTM time slots carrying size-reduced E1 frames, a multiframe location identifying DTM time slot MFL is added to mark the location of the size-reduced multiframe, more specifically to mark the end of one size-reduced multiframe and thus the beginning of the next size-reduced multiframe. In this exemplifying embodiment, the location of the size-reduced multiframe is thus identified by the location of the multiframe location identifying DTM time slot as such.

As the sixty-two DTM time slots that carry size-reduced E1 frames and the one frame location identifying DTM time slot together comprises a total of 63×64=4032 bits, this means, in comparison to the unreduced multi-frame size of 4096 bits, a size reduction of 64 bits, i.e. equivalent to exactly one DTM time slot per E1 multiframe.

Consequently, if four DTM time slots are allocated to carry each E1 frame, i.e. if 4×16=64 DTM time slots are used per E1 multiframe, i.e. one more DTM time slot per El multiframe than what is actually used by the encapsulation mechanism, a frame frequency justification opportunity of 64 bits per multiframe, i.e. per 4096 bits, will be available to accommodate for any occurring differences in frame frequencies between the mediums that carry the E1 stream and the DTM stream. As a frequency justification opportunity of 64 bits per 4096 bits corresponds to a relative frame frequency difference of 64/4097=15625 ppm, this provides a guard band for accommodating frame frequency differences that is approximately 150 times larger than the required one of 100 ppm. As is understood, if the current frame drift situation is such that the frame frequency justification opportunity is not needed for data transfer for a specific multi-frame, a DTM idle slot will be transmitted in the remaining 64-bit slot to mark that said slot this time carries non-valid data.

To be noted, the stream of DTM time slots illustrated at (D) in Fig. 2 is not equivalent to the DTM bitstream of DTM slots illustrated at (C) in Fig. 1. Instead, the stream of DTM time slots illustrated at (D) in Fig. 2 will typically be a stream of DTM time slots transmitted within a channel defined on a DTM bitstream of the kind illustrated at in Fig. 1, for example the stream of DTM time slot transmitted within the channel CH2 defined.

As is easily understood, the manner in which the original stream of E1 frames is reconstructed from the stream of DTM time slots illustrated at (D) in Fig. 2 will be straightforward. In short, the multiframe location identifying DTM slot will be detected regularly, thus identifying the location of the reduced E1 multi-frame in the stream of DTM slots. For each 31 bits that are "unpacked" from the so identified DTM slots that carry the reduced E1 multiframe, one time slot zero is added to mark the start of each respective E1 frame, thus generating a renewed E1 frame structure in similar to the one illustrated at (A) in Fig. 2.

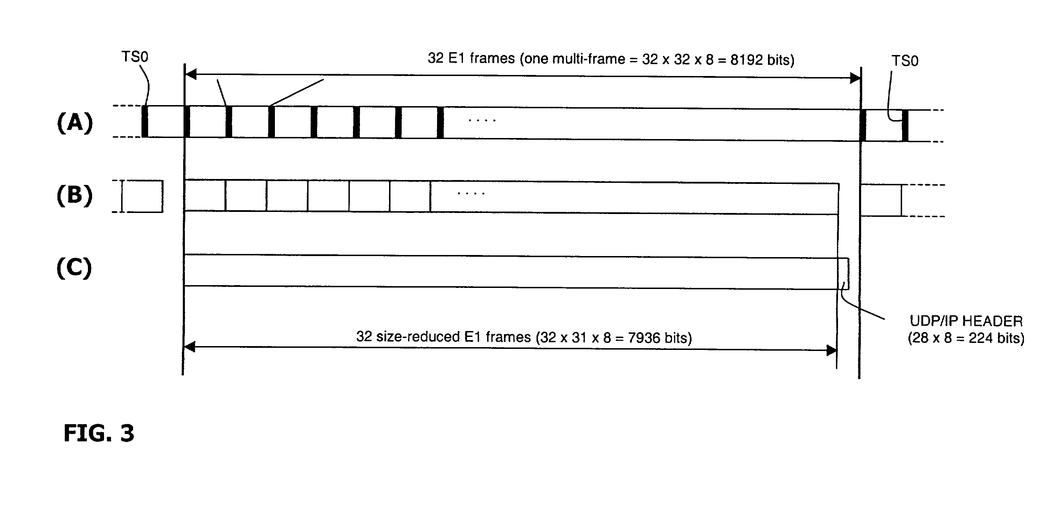

An nother exemplified embodiment of how E1 frames are mapped a UDP/IP packet according to another embodiment of the invention will now be described with reference to Fig. 3.

In Fig. 3, a multi-frame comprising thirty-two consecutive E1 frames, each forming part of a continuous stream of E1 frames and having a format of the kind illustrated in Fig. 2, is shown at (A), wherein the respective time slot zero TS0 of each E1 frame is schematically indicated. As this multiframe in Fig. 3 comprises thirty-two E1 frames, each E1 frame comprises thirty-two time slots, and each E1 time slot comprises one byte (eight bits), the total number of bits per multiframe is 32×32×8=8192.

According to this exemplifying embodiment of the invention, the time slot zero TS0 of each received E1 frame is deleted, thereby leaving a size-reduced multi-frame of thirty-two size-reduced E1 frames encompassing a total of 32×31×8=7936 bits, as schematically indicated at (B) in Fig. 3.

The size-reduced multi-frame is then mapped to form the body of a UDP/IP packet, as illustrated in Fig. 3 at (C).

The UDP/IP header of the packet, which as such identifies and marks the location of the size-reduced multi-frame, comprises twenty-eigth octets of data, i.e. 28×8=224 bits. Thus, in total, the size-reduced multi-frame and the added UDP/IP header comprises 7936+224=8160 bits of data, which, in comparison to the unreduced multiframe size of 8192 bits, means a size reduction of 32 bits. This size-reduction will thus make it possible to for example transmit the received E1 frames as IP encapsluated E1 frames over a channel having the same bandwidth as the received E1-connection.

As is easily understood, the manner in which the original stream of E1 frames is reconstructed from the stream of DTM time slots illustrated at (C) in Fig. 3 will be straightforward. In short, packet header will be detected regularly, thus identifying the size-reduced multiframe in the recevied data stream. For each 31 bits that are "unpacked" from the packet body, one time slot zero is added to mark the start of each respective E1 frame, thus generating a renewed E1 frame structure in similar to the one illustrated at (A) in Fig. 3.

As understood by those skilled in the art, the above described scheme may be altered, modified, and/or integrated within the scope of the invention, which is defined by the accompanying claims. As mentioned, the selection of which and how many El frames from which time slot zero shall be deleted, as well as the selection of how often and in what way information defining the location of a plurality of reduced E1 frames or for example a plurality of DTM slots carrying reduced E1 frames, may be performed in many different ways within the scope of the invention, the object being to reduce the amount of data bits to be transmitted as compared to the amount of allocated bandwidth, for example in order to accommodate possible frame frequency differences.

## Claims

1. A method for mapping E1 traffic in from a first communication link to a second communication link, said method comprising receiving a continuous stream of E1 frames on said first link and for each set of N E1 frames performing the steps of:
deleting time slot zero (TS0) from predefined E1 frames of said set of N E1 frames to transform the set of N E1 frames into a modified set of frames that include size-reduced E1 frames; and
adding an information field to said modified set of frames to identify the location of said modified set of frames; and
transmitting said modified set of frames with the so added information field on said second communication link,
the relation between the number of time slots so deleted from said set of N E1 frames and the size of said information field being such that the size of said modified set of frames and the thereto added information field is smaller than the size of said set of N E1 frames.

2. A method as claimed in claim 1, wherein the relation between the number of time slots so deleted from said set of N E1 frames and the size of said information field is such that the the relative difference in size between said set of N E1 frames and the combination of said modified set of frames and said additional information field is sufficient to accomodate for a relative frame frequency difference, between said links, of up to 100 ppm, thereby to accomodate for small differences between the frequency on the first and the frequency on the second link.

3. A method as claimed in claim 1 or 2, wherein said second communication link forms part of a DTM-network, and wherein said modified set of frames and the thereto added information field are transmitted as DTM time slots on said second communication link.

4. A method as claimed in claim 1, 2, or 3, wherein said step of deleting time slot zero from predefined E1 frames from said set of N E1 frames comprises deleting time slot zero from each E1 frame of said set of N E1 frames.

5. A method as claimed in any one of the preceding claims, including generating a set of M slots for said each set of N received E1 frames by:
mapping said modified set of frames into M-m slots; and
adding m additional slots to said M-m slots, said m additional slots providing said information field by identifying the location of said M-m slots and thus the location of said modified set of frames.

6. A method as claimed in claim 5, wherein the so-generated slots are 64-bit time slots.

7. A method as claimed in claim 5 or 6, wherein said step of deleting time slot zero (TS0) from predefined E1 frames of said set of N E1 frames comprises deleting time slot zero (TS0) from n predefined E1 frames of said set of N consecutive E1 frames

8. A method as claimed in claim 7, wherein n is equal to N.

9. A method as claimed in any one of claims 5-8, wherein M is equal to 16.

10. A method as claimed in any one of claims 5-9, wherein m is equal to 1.

11. A method as claimed in any one of claims 5-10, wherein N is an integer larger than 8.

12. A method as claimed in any one of claims 5-11, wherein the bits of said modified set of frames are mapped in closely packed relationship into said M-m slots.

13. A method as claimed in any one of the preceding claims, wherein said modified set of frames and the thereto added information field are transmitted on said second communication link as a data packet, the header of said packet providing said added information and the body of said packet providing said modified set of frames.

14. A method for deriving E1 traffic from a link transporting size-reduced E1 frames and that has been generated in accordance with any one of the preceding claims, said method comprising:
detecting each occurrence of said information field on said link, thereby determining the location of said modified set of frames; and, for each such modified set of frames,
generating a stream of E1 frames by adding a time slot zero (TS0) at predefined locations to the data contained in said modified set of frames.

15. A method for deriving E1 traffic from a stream of slots that has been generated in accordance with any one of claims 5-12, said method comprising:
receiving said stream of slots;
detecting each occurrence of said m additional slots providing said information field, thereby determining the location, in said stream of slots, of said set of M-m slots; and, for each such location determined set of M-m slots,
generating N E1 frames by adding a time slot zero (TS0) to the data contained in said M-m slots at predefined locations.

16. A method for mapping E1 traffic into 64-bit time slots in a communication network, said method comprising receiving a continuous stream of E1 frames and for each multiframe of sixteen E1 frames generating a set of sixty-three 64-bit time slots by the steps of:
deleting time slot zero (TS0) from each one of said sixteen E1 frames, thereby transforming said multiframe of sixteen E1 frames into a size-reduced multiframe containing sixteen size-reduced E1 frames;
mapping said size-reduced multiframe into sixty-two 64-bit time slots; and
adding an additional 64-bit time slot to said sixty-two 64-bit time slots, said additional 64-bit time slot identifying the location of said sixty-two 64-bit time slots and thus the location of said size-reduced multi-frame containing sixteen size-reduced E1 frames.

17. A method for deriving E1 traffic from a stream of 64-bit time slots that have been generated in accordance with claim 16, said method comprising:
receiving said stream of 64-bit time slots;
detecting each occurrence of said additional 64-bit time slot, thereby determining the location, in said stream of 64-bit time slots, of a set of sixty-two 64-bit time slots; and, for each such determined set of sixty-two 64-bit time slots,
generating a multiframe of sixteen E1 frames by adding a time slot zero (TS0) to each 31 bits of data contained in said sixty-two 64-bit time slots.

18. A method for mapping E1 traffic in from a first communication link to a second communication link, said method comprising receiving a continuous stream of E1 frames on said first link and for each set of N E1 frames performing the steps of:
deleting time slot zero (TS0) from predefined E1 frames of said set of N E1 frames to transform the set of N E1 frames into a modified set of frames that include size-reduced E1 frames; and
generating a data packet, said modified set of frames forming the body thereof; and
transmitting said data packet on said second communication link,
the relation between the number of time slots so deleted from said set of N E1 frames and the size of the header/trailer of said data packet being such that said data packet is smaller that said set of N E1 frames.
